# FASCICULE DE BREVET EUROPEEN

(11) **EP 1 798 122 B1**
(45) Date de publication et mention de la délivrance du brevet: **10.09.2008**
(21) Numéro de dépôt: 06301234.8
(22) Date de dépôt: 11.12.2006
(51) Int. Cl.: B60R 22/18, F16B 21/09, F16B 39/10

(54) **Moyen de fixation d'une sangle de ceinture de sécurité**
Mittel zur Befestigung eines Sicherheitsgurtes
Fixing means for a safety belt

(30) Priorité: 19.12.2005 FR 0512905
(43) Date de publication de la demande: 20.06.2007
(73) Titulaire: RENAULT S.A.S., 92100 Boulogne Billancourt (FR)
(72) Inventeur: Angelini, Bruno, 78125, Poigny La Foret (FR); Jumel, Francis, 92330, Sceaux (FR); Scampucci, Pascal, 60800, Crepy en Valois (FR)

(56) Documents cités:
- EP-A- 1 557 326
- WO-A-01/42063
- US-A- 3 406 433
- US-A- 5 427 412

## Description

L'invention concerne un moyen de fixation d'une sangle de ceinture de sécurité, et notamment de la partie de boucle d'une ceinture de sécurité, en particulier au niveau d'une attache arrière latérale.

Il est nécessaire de disposer d'une fixation d'extrémité de sangle qui permette un montage aisé (sans visseuse), rapide et fiable sans risque d'erreur.

On connaît déjà un dispositif de fixation rapide de boucle de ceinture de sécurité, consistant en un support métallique destiné à être fixé sur une paroi de véhicule par l'intermédiaire d'un pion de fixation à tête élargie porté par la paroi. Le support comporte d'une part un premier orifice destiné à recevoir une extrémité de sangle de ceinture et d'autre part un second orifice destiné au passage et au blocage de la tête de pion. Ce second orifice comporte une pièce rapportée définissant une ouverture en forme de sablier, avec deux portions inférieure et supérieure communiquant par un passage plus étroit, la portion supérieure et la portion inférieure étant respectivement plus et moins large que la tête du pion. Pour monter le support, on introduit la tête du pion de fixation dans la portion supérieure de l'ouverture en sablier puis on tire sur le support pour faire passer le pion de la portion supérieure à la portion inférieure. La pièce rapportée est en matériau suffisamment élastique pour permettre le passage en force du pion de fixation d'une portion à l'autre, à travers le passage étroit, dont la largeur est légèrement plus petite que le diamètre de la tige du pion.

Les publications WO-A-01/42063, US-A-3406433, US-A-5427412 et EP-A-1557326 décrivent des moyens de fixation de boucle de ceinture de sécurité dans lesquels un pion coopère avec une ouverture en forme de sablier ménagée dans un support.

Cependant, un tel dispositif, qui a l'avantage de la rapidité de montage, ne présente pas la fiabilité nécessaire en ce sens qu'il est possible que le pion reste en position intermédiaire, entre les deux portions de l'ouverture, voire en position initiale de montage dans la portion supérieure.

Le but de l'invention est de perfectionner le dispositif connu pour lui apporter la fiabilité nécessaire.

L'invention atteint son but grâce à un moyen de fixation rapide d'une sangle de ceinture de sécurité, consistant en un support destiné à être fixé sur une paroi de véhicule par l'intermédiaire d'un pion de fixation porté par la paroi, le support comportant une zone d'accrochage de ladite sangle de ceinture et une zone de fixation comprenant une zone d'entrée et une zone de réception d'un pion, caractérisé en ce que le moyen de fixation comporte également un élément amovible formant un élément de validation du verrouillage du moyen de fixation dans sa position correcte.

Avantageusement la zone de fixation est constituée par une ouverture en forme de sablier, avec deux portions inférieure et supérieure communiquant par un passage plus étroit, la portion supérieure étant plus grande que la portion inférieure, et en ce que le pion de fixation comporte une tête aplatie.

Avantageusement, l'élément de validation est constitué par un élément mobile rapporté de blocage du passage étroit, adapté pour venir occuper ledit passage étroit et empêcher la remontée malencontreuse du pion de fixation de la portion inférieure à la portion supérieure.

Avantageusement, ledit élément rapporté mobile fait partie d'un capot articulé sur le support, susceptible de venir se fermer sur l'ouverture une fois le montage effectué, en introduisant ledit élément dans la région dudit passage.

Avantageusement, ledit capot comporte également un second élément destiné à s'introduire, quand le capot est fermé, dans la portion supérieure de l'ouverture pour éjecter le pion qui serait resté dans cette mauvaise position.

Avantageusement, ledit élément rapporté mobile sert au clipsage du capot en position fermée de blocage.

L'invention offre donc une solution simple garantissant la sécurité du montage. Le capot, fixé au support, ne peut se perdre ; le surcoût engendré par le capot est réduit ; la fermeture du capot se fait facilement même à l'aveugle ; la présence du capot fermé améliore de plus l'esthétique du dispositif de fixation.

D'autres caractéristiques et avantages de l'invention apparaîtront à la lecture d'un mode de réalisation de l'invention, en référence aux dessins annexés sur lesquels :
- la figure 1 est une vue en perspective d'un moyen de fixation de l'art antérieur dont la présente invention est un perfectionnement, le pion de fixation étant placé dans sa position de fixation correcte dans l'ouverture inférieure du dispositif.
- la figure 2 est une vue analogue à la figure 1, dans laquelle le moyen de fixation est équipé d'un capot conforme à l'invention, le pion de fixation étant placé dans sa position intermédiaire, entre les deux ouverture.
- la figure 3 est une vue analogue à la figure 2, le pion de fixation étant placé dans l'ouverture supérieure du dispositif.
- la figure 4 est une vue en coupe longitudinale du moyen de l'invention, capot fermé, analogue à la figure 1, le pion de fixation étant placé dans sa position de fixation correcte dans l'ouverture inférieure du dispositif.

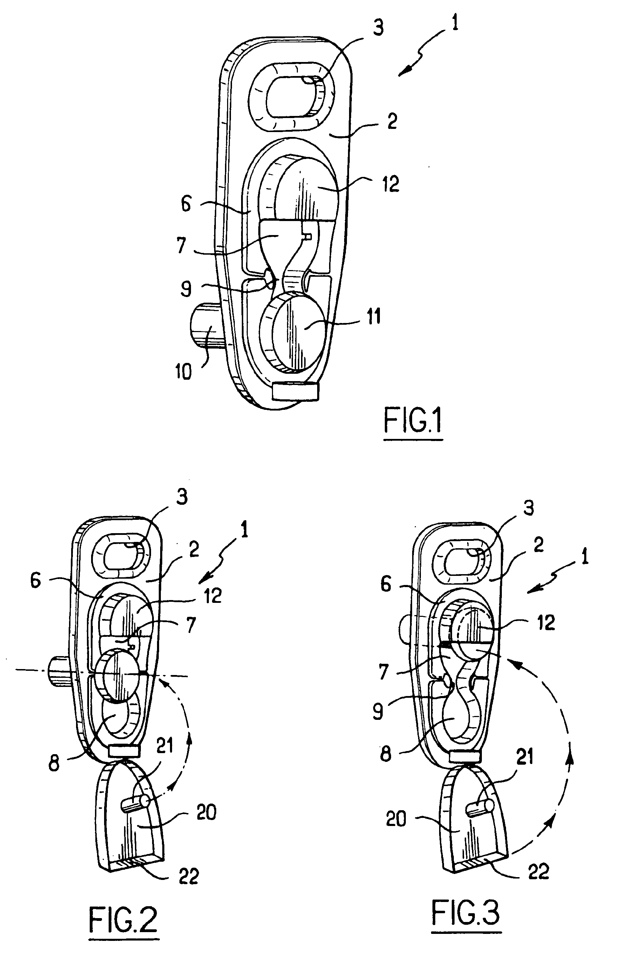

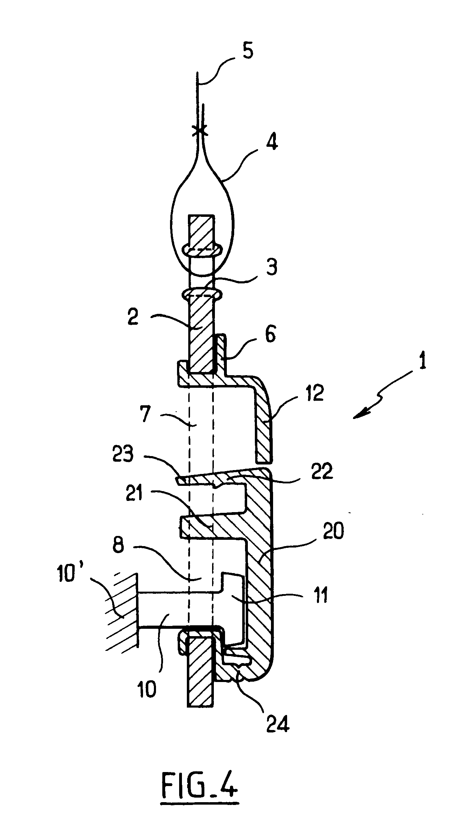

Le moyen 1 de fixation de ceinture de sécurité 5, connu de l'art antérieur et représenté sur la figure 1, comporte un support plat métallique allongé 2 destiné à être fixé sur une paroi de véhicule par l'intermédiaire d'un pion de fixation 10 à tête élargie 11 porté par la paroi 10' (cf. figure 4). Le support 2 comporte un orifice supérieur 3 d'accrochage de sangle de ceinture 5 formant une boucle 4. Le support 2 comporte d'autre part une ouverture inférieure allongée en forme de huit ou de sablier, éventuellement formée par l'intermédiaire d'une pièce rapportée 6 en matière plastique, délimitant deux portions d'ouverture supérieure 7 et inférieure 8, communiquant par un passage plus étroit 9. La portion supérieure 7 est plus grande que la portion inférieure 8 de manière que la tête 11 du pion 10 puisse pénétrer dans la portion supérieure 7 mais pas dans la portion inférieure 8. Une paroi 12 vient couvrir partiellement à l'avant le haut de la portion supérieure 7, à une distance légèrement supérieure à l'épaisseur de la tête 11 de pion 10, de façon à bloquer l'avancée de la tête de pion 10. La mise en place du dispositif 1 est la suivante. On vient placer le moyen 1 en présentant la portion supérieure 7 sur la tête 11 de pion 10 qui peut s'y engager et va buter contre la paroi 12 ; en tirant le moyen 1 vers le haut, la tige du pion 10 passe en force par le passage étroit 9 puis dans la portion inférieure 8, dont il ne peut ressortir car la tête 11 est plus large que la portion inférieure 8. Cette position du pion 10 dans le moyen de fixation 1, représentée en figures 1 et 4, est la position correcte dont il faut s'assurer. Les positions d'engagement ou de passage intermédiaire représentées en figures 3 et 2 sont des positions transitoires ; il faut s'assurer qu'on ne reste pas ou ne retourne pas dans ces positions.

Selon l'invention, il est prévu un capot mobile 20, articulé par exemple par une charnière 24 à la partie inférieure du support 2, avantageusement, une charnière solidaire de la pièce rapportée 6 délimitant les portions d'ouvertures 7 et 8. Le capot 20 est conformé de manière à ne pas interférer avec le montage du pion dans le dispositif de fixation selon les étapes qui ont été décrites ; à cet effet, le capot peut prendre la position représentée aux figures 2 et 3 où il pend sous le support 2. Le capot 20 peut être rabattu de manière à venir, comme représenté en figure 4, se placer devant les portions d'ouverture 7 et 8, avantageusement dans la continuité de la surface 12 et se clipser dans cette position grâce à des moyens élastiques d'encliquetage non représentés. Le capot 20 forme une sorte de couvercle à bords, et comporte sur sa face intérieure un doigt 21 qui vient se placer dans ou autour du passage étroit 9, grâce à une forme adaptée. De la sorte, le pion 10 représenté dans sa position correcte en figure 4 ne peut plus repasser à la suite de mouvements involontaires dans le passage étroit 9, ni a fortiori dans la portion supérieure 7. Le doigt 21 peut avantageusement constituer de par sa forme et en coopération avec celle du passage étroit 9, le moyen élastique d'encliquetage permettant de clipser le capot 20 sur la pièce rapportée 6.

Si le pion était déjà dans cette position intermédiaire, dans le passage étroit 9, au moment de la fermeture du capot 20 (cf. figure 2), le doigt 21 buterait contre la tête 11 du pion 10 et le capot ne pourrait se refermer correctement, signalant tout de suite le montage incorrect.

Le bord inférieur 22 du capot 20, qui est destiné à venir se rabattre au voisinage de la paroi 12, devant l'ouverture 7, comporte avantageusement une patte de prolongement 23 (représentée uniquement sur la figure 4) permettant, lors de la fermeture du capot et si le pion est resté dans la portion supérieure 7 (cf. figure 3), d'éjecter la tête 11 de pion 10 hors de la portion 7.

## Revendications

1. Moyen de fixation rapide d'une sangle de ceinture de sécurité, consistant en un support (2) destiné à être fixé sur une paroi (10') de véhicule par l'intermédiaire d'un pion de fixation (10) à tête aplatie (11) porté par la paroi (10'), le support (2) comportant une zone d'accrochage de ladite sangle de ceinture et une zone.de fixation (7, 8) comprenant une zone d'entrée et une zone de réception d'un pion et étant constituée par une ouverture (7,8) en forme de sablier, avec deux portions inférieure (8) et supérieure (7) communiquant par un passage plus étroit (9), la portion supérieure (7) étant plus grande que la portion inférieure (8), le support comprenant un capot (20) articulé susceptible de venir se fermer sur l'ouverture (7,8) une fois le montage effectué, en introduisant un premier élément (21) dans la région dudit passage étroit (9) pour le bloquer et empêcher la remontée malencontreuse du pion de fixation (10) de la portion inférieure (8) à la portion supérieure (7), **caractérisé en ce que** ledit capot (20) comporte également un second élément (23) destiné à s'introduire, quand le capot (20) est fermé, dans la portion supérieure (7) de l'ouverture pour éjecter le pion (10) qui serait resté dans cette mauvaise position.

2. Moyen selon la revendication 1, **caractérisé en ce que** ledit premier élément (21) sert au clipsage du capot (20) en position fermée.

## Claims

1. Means for rapidly mounting a seat belt, consisting of a support (2) intended to be mounted on a vehicle wall (10') by means of a mounting pin (10) having a flat head (11) and borne by the wall (10'), the support (2) comprising an area for attaching said seat belt and a mounting area (7, 8) comprising an area for inserting a pin and an area for receiving the latter and consisting of an hourglass-shaped opening (7, 8) having a lower part (8) and an upper part (7) in communication via a narrower passage (9), the upper part (8) being larger than the lower part (8), the support comprising an articulated cap (20) able to close over the opening (7, 8) once the fitting is complete, by introducing a first element (21) into the region of said narrow passage (9) in order to block the latter and prevent untimely raising of the mounting pin (10) from the lower part (8) into the upper part (7), **characterized in that** said cap (20) also comprises a second element (23) to be introduced, when the cap (20) is closed, into the upper part (7) of the opening in order to eject the pin (10) should the latter have remained in this incorrect position.

2. Means according to Claim 1, **characterized in that** said first element (21) is used to clip-fasten the cap (20) in the closed position.

## Patentansprüche

1. Mittel zur schnellen Befestigung eines Sicherheitsgurts, das aus einem Träger (2) besteht, der durch einen an einer Wand (10') des Fahrzeugs vorgesehenen Befestigungsstift (10) mit abgeflachtem Kopf (11) an der Wand (10') befestigt werden soll, wobei der Träger (2) einen Bereich zum Anbringen des Sicherheitsgurts und einen Befestigungsbereich (7, 8) aufweist, der einen Eintrittsbereich und einen Aufnahmebereich für einen Stift umfasst und durch eine eieruhrförmige Öffnung (7, 8) mit einem unteren (8) und einem oberen (7) Teil gebildet wird, die durch einen engeren Durchgang (9) in Verbindung stehen, wobei der obere Teil (7) größer ist als der untere Teil (8), wobei der Träger eine angelenkte Abdeckung (20) aufweist, die nach erfolgter Montage auf der Öffnung (7, 8) geschlossen werden kann, indem ein erstes Element (21) in den Bereich des engen Durchgangs (9) eingeführt wird, um ihn zu blockieren und ein versehentliches Hochrutschen des Befestigungsstifts (10) vom unteren Teil (8) zum oberen Teil (7) zu verhindern, **dadurch gekennzeichnet, dass** die Abdeckung (20) des Weiteren ein zweites Element (23) aufweist, das, wenn die Abdeckung (20) geschlossen wird, in den oberen Teil (7) der Öffnung eingeführt werden soll, um den möglicherweise in der falschen Position verbliebenen Stift (10) auszustoßen.

2. Mittel nach Anspruch 1, **dadurch gekennzeichnet, dass** das erste Element (21) dem Einrasten der Abdeckung (20) in geschlossener Position dient.
